# EUROPEAN PATENT SPECIFICATION

(11) **EP 2 929 795 B1**
(45) Date of publication and mention of the grant of the patent: **07.11.2018**
(21) Application number: 15162224.8
(22) Date of filing: 01.04.2015
(51) Int. Cl.: B33Y 80/00

(54) **Tightening device for footwear and footwear provided with such tightening device**
Einspannvorrichtung für Schuhwerk und Schuhwerk mit solche Einspannvorrichtung.
Dispositif de serrage pour article chaussant et article chaussant équipé d'un tel dispositif de serrage

(30) Priority: 10.04.2014 IT TO20140308
(43) Date of publication of application: 14.10.2015
(73) Proprietor: Tecnica Group S.p.A., 31040 Giavera del Montello (TV) (IT)
(72) Inventor: Grandin, Giorgio, 31040 Giavera Del Montello (TV) (IT); Granzotto, Luca, 31040 Giavera Del Montello (TV) (IT)
(74) Representative: Robba, Pierpaolo

(56) References cited:
- EP-A2- 0 121 657
- AT-B- 250 829
- DE-A1- 2 157 948
- FR-A1- 2 677 527
- US-A- 3 204 307
- US-A- 3 407 450

## Description

### Technical Field

The present invention relates to a tightening device for footwear, more particularly for sports footwear.

The present invention further relates to a footwear, more particularly to a sports footwear, provided with such tightening device.

### Prior Art

In the field of footwear, and especially of sports footwear, adjustable tightening device are known which provide a strap element transversely arranged through the opening dividing the two quarters at the opposite sides of the upper, and tensioning means of tensioning said strap element.

According to a known configuration of said tightening devices, a first end of the strap element is attached to a base on a first side of the upper and the strap element is guided through a return element which is connected to the opposite side of the upper and then folded over itself and fixed onto itself through appropriate coupling means such as for instance inserts made of Velcro™. In order to tension the strap element, the return element is connected to a lever arm, the lever being in turn hinged on the footwear upper in such a way that, when the lever is closed, the return element moves and the strap element is tensioned.

The tightening device described above is adjustable and adjustment is effected by acting onto the strap element. Indeed, by overlapping a longer or shorter portion of the strap element on itself it is possible to adjust tightening, by bringing more or less close to each other the two quarters at the sides of the upper.

A different known configuration of the tightening devices in question that is particularly suitable for being used for tightening the cuff of sports footwear provides for a strap element which is connected at its one end to a buckle and at its opposite end is connected to a band made of a substantially inextensible material. The band is inserted into the buckle so as to form a closed ring around the cuff of the footwear. By adjusting the position of the buckle along the band it is possible to reduce the width of said closed ring until the strap element is tensioned or, vice versa, to increase the width of said closed ring, thus releasing said strap element.

In this case, the adjustment is not effected by acting onto the strap element (which has a fixed length), but the adjustment of the tightening device and the tensioning of the strap element are effected simultaneously by acting onto the buckle and the band.

A disadvantage common to the devices described above consists in that whenever the user takes off his/her footwear he/she must release the tightening device entirely in order to take his/her foot out of the footwear, thus losing the correct adjustment of said device. Consequently, whenever the user puts on the footwear again, he/she is compelled to adjust the tightening device again, which operation may require several attempts before the correct adjustment is reached.

In this connection it is to be noted that the fact of obtaining optimal adjustment of the tightening device is a strongly felt problem with sports footwear, because a correct tightening of the footwear on the foot and on the ankle during sports practice affects not only the athlete's performance, but even his/her safety.

Another drawback common to the tightening devices described above consists in that the strap element and/or the band must have a length enough to ensure a wide range of possibilities for adjustment. This implies that when these elements are completely free and disengaged, they may be of hindrance for the user and may come into contact with the ground and get dirty.

EP 121 657 discloses a tightening device for a ski boot comprising a closing lever pivotally mounted on a bearing plate which can be fixed at a first point on the ski boot, a tension cable the free end of which can be fixed at a second point on the ski boot, a toothed belt and a pawl which engages with the teeth on this toothed belt, so that the toothed belt and the pawl form a connection of adjustable length between the closing lever and the tension cable, wherein the toothed belt is connected to the closing lever and the pawl is connected to the tension cable.

FR 2 677 527 discloses a tightening device suitable for being fastened to the free end of a strap, the other end of the strap being fixed to the item to be tightened; the tightening device comprises engaging means, cooperating with corresponding engaging means provided on the item to be tightened, passage means through which the strap can slide and around which the strap is wound, and locking means for blocking the strap when the desired tightening has been achieved.

DE 2157948 discloses a tightening device for footwear comprising an adjusting lever which is pivotally mounted on the footwear and a tightening lever which is articulated to the adjusting lever ans suitable for cooperating with an anchoring plate provided on the footwear, wherein the tightening lever includes two portions, movable relative to each other in the longitudinal direction.

The main object of the present invention is therefore to overcome the drawbacks of the prior art by providing a footwear that allows, upon each use, to quickly tension and release the tightening device while substantially maintaining the optimal adjustment of the tightening device, without having to adjust again *ex novo* said tightening device upon each use.

Another object of the present invention is to provide a footwear in which the tightening device is not of hindrance for the user even when said device is not tensioned.

These and other objects are achieved by the tightening device as claimed in the appended claims.

### Summary of the Invention

According to its more general aspects, the tightening device according to the invention comprises a strap element and tensioning means for tensioning said strap element, wherein said tensioning means comprise at least one hook element into which the strap element can be inserted and out of which the strap element can be taken without having to entirely free said tightening device and without acting onto the adjustment of said tightening device. Thus, owing to the presence of said hook element, it will be possible to release the tension of the strap element so as to allow to take the foot out of the footwear without acting onto the adjustment of the tightening device, i.e. thus maintaining the "memory" of the correct adjustment.

The user has therefore to the adjust the tightening device on the basis of his/her needs only upon his/her first use of the footwear. Subsequently he/she can take off and put on the footwear without having to intervene each time for correcting the adjustment of said tightening device.

The invention can advantageously be incorporated both in tightening devices in which adjustment is effected by acting onto the strap element and in tightening devices in which adjustment is effected by acting onto the tensioning means.

In addition, the teachings of the invention advantageously allow to realize tightening devices comprising strap elements having particularly simple shapes and structures, which could not be used in tightening devices of known kind.

### Brief Description of the Drawings

Further characteristics and advantages of the invention will become more apparent from the following detailed description of a preferred embodiment of the invention, given by way of non-limiting example with reference to the attached drawings, in which:
- Figure 1 schematically shows a footwear provided with a tightening device according to a first embodiment of the invention;
- Figure 1a shows a detail of the tightening device of Figure 1 on an enlarged scale;
- Figure 2 schematically shows a footwear provided with a tightening device which is not part of the invention;
- Figure 2a shows a detail of the tightening device of Figure 2 on an enlarged scale;
- Figure 2b shows the detail of the tightening device of Figure 2 according to a variant.

### Description of Preferred Embodiments

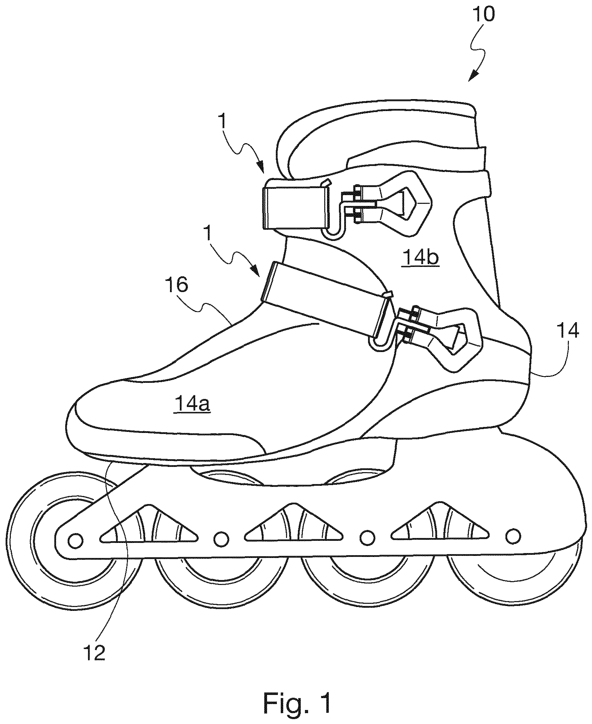

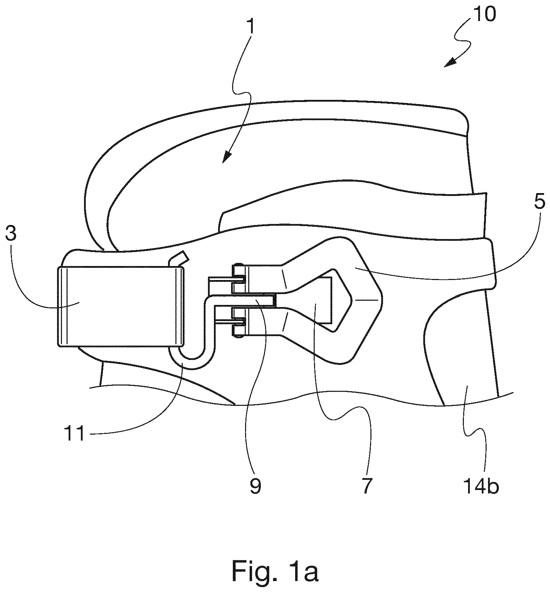

Referring initially to Figures 1 and 1a, there is illustrated a preferred embodiment of the present invention.

A sports footwear 10, more particularly an in-line roller skate, is schematically shown in Figure 1.

The footwear 10 comprises a sole 12 - which in the example shown will be connected to the frame bearing the in-line rollers - and an upper 14 defining at its inside a space for receiving the user's foot. In particular, the upper 14 preferably comprises a lower part 14a that receives the user's foot and an upper part or cuff 14b that receives the ankle and the lower portion of the calf of the user.

The upper 14 has a longitudinal opening 16 extending over the lower part 14a and over the upper part 14b of the upper 14 and defining on its opposite sides two quarters of the upper. Thanks to the longitudinal opening 16, said quarters of the upper can be spread apart in order to enable the user to insert his/her foot into the footwear 10 and to take it out of it. Tightening devices are provided along said opening 16 in order to keep the quarters of the upper close to each other during use of the footwear 10 and prevent the foot from accidentally slipping out of it. Said tightening devices are preferably adjustable in order to allow adjustment of the closure of the upper 14 - by bringing more or less close to each other the quarters of said upper - thus guaranteeing maximum comfort to the user.

In particular, the footwear 10 comprises two tightening devices 1 according to a first embodiment of the present invention, one arranged in the region of the instep of the lower part 14a of the upper 14 and the other one arranged in the region of the cuff 14b of the upper 14 and illustrated in more detail in Figure 1a.

The tightening device 1 comprises a strap element 3 which is attached at a first end to one side of the upper and extends transversely over the opening 16 of the upper 14, and tensioning means for tensioning said strap element 3.

Said tensioning means comprise a lever element 5 hinged to a base 7 fixed to the opposite side of the upper with respect to said first end of the strap element and a tie-rod 9 connected to said lever element 5 and having a return element 11 for the strap element 3. Said strap element 3 can be guided around the return element 11 and folded and overlapped onto itself; in a manner known per se the two overlapping parts of the strap element 3 comprise mutually cooperating coupling means for locking said overlapping portion in the desired position relative to each other. The lever element 5 is capable of passing from an open position in which the strap element 3 passing around the return element 11 is not tensioned, to a closed position in which the return element 11 - entrained by the lever element 5 - moves and tensions the strap element 3 by exerting a traction force onto it.

According to the invention the return element is a hook element 11.

By means of this measure, when the strap element 3 is not tensioned, it can be taken out of the hook element 11 or inserted into the same without having to separate the two overlapping parts of said strap element.

This possibility brings about obvious advantages.

As a first thing, it is apparent that by more or less overlapping the two parts of the strap element 3 it is possible to adjust the tightening element, by reducing or increasing, respectively, the distance between the quarters of the upper at the opposite sides of the upper 16 once the strap element has been tensioned.

The user must find the correct adjustment of the tightening device 1, therefore the correct amount of overlapping of the parts of the strap element.

Thanks to the invention such operation needs to be effected only upon the first use of the footwear.

Subsequently, in fact, owing to the presence of the hook element 11, the footwear can be taken off and put on again without losing the adjustment of the strap element 3, simply by taking out of the hook element 11 the loop formed by the strap element 3 and then inserting it again into said hook element upon the subsequent use.

Secondly, it is no longer necessary to release the strap element 3 over its entire length, i.e. also when said element is removed from the hook element 11, it will have a small extension and will not be of hindrance for the user.

As anticipated above, the invention further allows to provide for the use of strap elements having a particularly simple shape that could not be used in tightening devices of known kind.

In a variant of the embodiment of Figure 1, instead of using a strap element suitable for being folded over itself and provided with inserts made of Velcro™ or similar coupling means, it is possible to use a strap element that is attached at a fist end to one side of the upper, extends transversely over the opening of the upper and have, close to the opposite end, a plurality of aligned eyelets arranged at mutual distance (preferably mutually equidistant).

The adjustment of the tightening device is made by adequately choosing the slot of the strap element into which the hook element 11 is to be inserted. It is evident that in this variant the adjustment will be of the discrete type, and not of the continuous type as in the example shown in Figure 1.

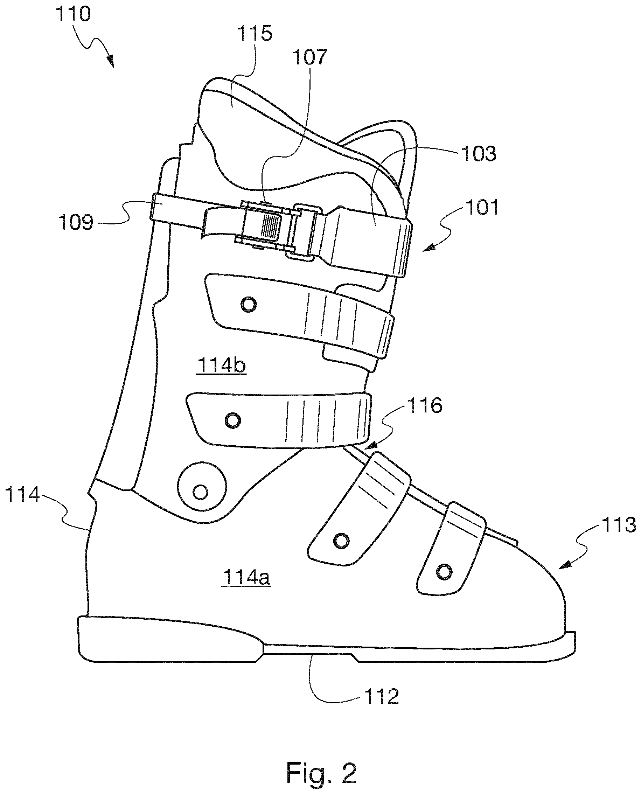

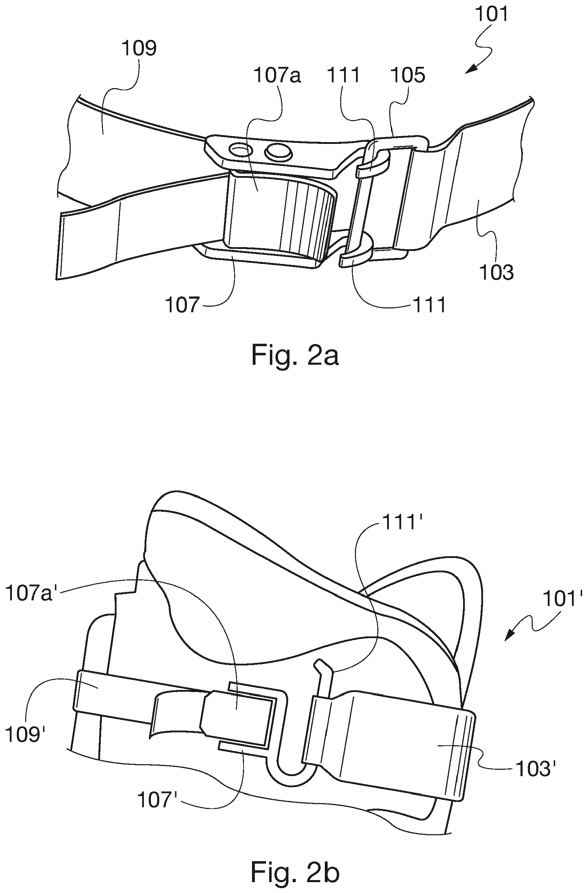

Turning now to Figures 2 and 2a, there is illustrated a footwear provided with a tightening device which is not part of the invention.

A sports footwear 110, more particularly a ski boot, is schematically shown in Figure 2.

In this case, the footwear 110 comprises an outer shell 113 comprising a sole 112 - which, in the illustrated embodiment, is provided with connecting means for connection to a ski binding - and an upper 114 housing an inner liner 115 defining at its inside a space for receiving the user's foot. In particular, the upper 114 of the shell 113 preferably comprises a lower part that receives the user's foot and an upper part or cuff that receives the ankle and the lower portion of the calf of the user.

The upper 114 has a longitudinal opening 116 that extends over the lower part and over the cuff of the upper of the shell and defines at its opposite sides two quarters of the upper. Thanks to the longitudinal opening 116 said quarters of the upper can be spread apart in order to enable the user to insert his/her foot into the footwear 110 and take it out from said footwear.

Tightening devices are provided along said opening 116 in order to keep the quarters of the upper close to each other during use of the footwear 110 and prevent the foot from accidentally slipping out of it. Said tightening devices are preferably adjustable in order to allow adjustment of the closure of the upper 114 of the shell 113, thus guaranteeing maximum comfort to the user.

In particular, the footwear 110 comprises a tightening device 101, especially suitable for being used in the region of the cuff 114b of a sports footwear 110 and illustrated in more detail in Figure 2a.

The tightening device 101 comprises a strap element 103 which extends transversely over the opening 116 of the upper 114 of the shell 113, and tensioning means for tensioning said strap element 103.

The strap element 103 is connected at its one end, through a ring 105, to a buckle 107 and at its opposite end, through a similar ring (not visible in Figure 2), to a band 109. The band 109 is guided around the cuff 114b and inserted into the buckle 107 so as to form a closed ring around said cuff. By adjusting the position of the buckle 107 along the band 109 it is possible to reduce or increase the width of said closed ring, thus adjusting the tightening device and simultaneously tensioning or releasing the strap element 103.

To this aim, the buckle 107 comprises a lever element 107a capable of passing from an open position in which the band 109 can freely slide relative to the buckle 107 and the strap element is slack, to a closed position in which the buckle 107 engages said band 109, which becomes locked relative to said buckle, and the strap element is tensioned.

The buckle 107 comprises a hook element 111 - or rather a pair of hook elements 111 in the example illustrated in Figures 2 e 2a - to which the strap element 103 is connected.

By means of this measure, when the strap element 103 is not tensioned, it can be taken out of the hook elements 111 or inserted into the same without having to fully take the band 109 out of the buckle 107.

This possibility brings about obvious advantages.

As a first thing, when the user needs to take off the footwear 110, he can remove the strap element 103 from the hook elements 111 of the buckle 107 without substantially modifying the position of said buckle 107 relative to the band 109, but simply by bringing the lever element 107a from the closed position to the open position, so that the correct adjustment of the tightening device 101 is substantially maintained.

The user must therefore find the correct adjustment of the tightening device 101, therefore the correct position of the buckle 107 along the band 109 only upon his/her first use of the footwear.

Subsequently, in fact, owing to the presence of the hook elements 111, the footwear can be taken off and put on again while maintaining the adjustment of the tightening device 101 substantially unaltered.

Secondly, it is no longer necessary to release the band 109 over its entire length, i.e. also when the tightening element is released the band is not of hindrance for the user.

In Figure 2b there is illustrated a variant of the tightening device shown in Figure 2a.

Also according to this variant, the tightening device 101' comprises a strap element 103' extending transversely over the opening of the upper of the shell, and tensioning means for tensioning said strap element 103', in this case too said tensioning means comprising a buckle 107' and a band 109', substantially arranged and structured as in the variant described previously.

According to the variant of Figure 2b, the buckle 107' comprises a single hook element 111' and the strap element 103' comprises at its one end an eyelet 105' that can be inserted into the hook element 111' or removed therefrom when the lever element 107a' of the buckle 107' is in its open position, i.e. when the strap element 103' is not tensioned.

It is apparent from the above description that the invention fully achieves the objects set forth above.

It is further evident that the above detailed description has been provided only by way of example and that several modifications and variants are possible without departing form the scope of protection as defined by the appended claims.

## Claims

1. Tightening device (1) for footwear, of the kind comprising a strap element (3) and tensioning means or elements (5,7,9,11) for tensioning said strap element, wherein said tensioning elements comprise a hook element (11) and said strap element is connected to said tensioning means through said hook element (11), **characterized in that** said strap element (3) folds over itself thus forming a loop about a return element, wherein said return element is connected to a tie-rod (9) connected to a lever element (5) and wherein said return element is hook element (11).

2. Tightening device according to claim 1, wherein the extension of the folded section of said strap element (3) can be adjusted.

3. Tightening device according to claim 1 or 2, wherein said strap element comprises a plurality of aligned eyelets arranged at mutual distance, wherein said tensioning elements comprise a tie-rod (9) connected to a lever element (5) and wherein said tie-rod terminates with a hook element (11) adapted to engage into one of said eyelets.

4. Footwear (10), in particular sports footwear, comprising a sole (12;) and an upper (14), said upper comprising a longitudinal opening (16) defining at opposite sides corresponding quarters of the upper, wherein tightening devices are provided along said longitudinal opening (16), **characterized in that** at least one of said tightening devices is a tightening device (1) according to any of the claims 1 to 4.

5. Footwear (10) according to claim 4, wherein said upper (14) comprises a lower part (14a) and an upper part (14b).

6. Footwear (10) according to claim 5, wherein a tightening device (1) according to any of the claims 1 to 4 is arranged along said longitudinal opening (16) at said lower part (14a) of said upper.

7. Footwear (10) according to claim 6 or 5, wherein a tightening device (1) according to any of the claims 1 to 4 is arranged along said longitudinal opening (16) at said upper portion (14b) of said upper.

## Patentansprüche

1. Einspannvorrichtung (1) für Schuhwerkt einer Art, die ein Bandelement (3) und Spannmittel oder Elemente (5, 7, 9, 11) zum Spannen des Bandelements aufweist, wobei die Spannelemente ein Hakenelement (11) aufweisen und das Bandelement über das Hakenelement (11) mit dem Spannmittel verbunden ist, **dadurch gekennzeichnet, dass** das Bandelement (3) über sich selbst gefaltet ist und so eine Schlaufe um ein Rückführelement bildet, wobei das Rückführelement mit einer Spannstange (9) verbunden ist, die mit einem Hebelelement (5) verbunden ist und wobei das Rückführelement das Hakenelement (11) ist.

2. Einspannvorrichtung nach Anspruch 1, wobei die Ausdehnung des gefalteten Abschnitts des Bandelements (3) angepasst werden kann.

3. Einspannvorrichtung nach Anspruch 1 oder 2, wobei das Bandelement mehrere ausgerichtete Ösen aufweist, die in einem Abstand von einander angeordnet sind, wobei das Spannelement eine Spannstange (9) aufweist, die mit einem Hebelelement (5) verbunden ist, und wobei die Spannstange mit einem Hakenelement (8) endet, das dafür vorgesehen ist, in eine der Ösen einzugreifen.

4. Schuhwerk (10), insbesondere Sportschuhwerk, mit einer Sohle (12) und einem Oberteil (14), wobei das Oberteil eine längliche Öffnung (16) aufweist, die auf gegenüberliegenden Seiten entsprechende Viertel des Oberteils definiert, wobei Spannvorrichtungen entlang der länglichen Öffnung (16) vorgesehen sind, **dadurch gekennzeichnet, dass** wenigstens eine der Spannvorrichtungen eine Spannvorrichtung(1) nach einem der Ansprüche 1 bis 4 ist.

5. Schuhwerk (10) nach Anspruch 4, wobei das Oberteil (14) einen unteren Teil (14a) und einen oberen Teil (14b) aufweist.

6. Schuhwerk (10) nach Anspruch 5, wobei eine Einpannvorrichtung (1) nach einem der Ansprüche 1 bis 4 entlang der länglichen Öffnung (16) an dem unteren Teil (14a) des Oberteils angeordnet ist.

7. Schuhwerk (10) nach Anspruch 6 oder 5, wobei eine Einspannvorrichtung (1) nach einem der Ansprüche 1 bis 4 entlang der länglichen Öffnung (16) an dem oberen Teil (14b) des Oberteils angeordnet ist.

## Revendications

1. Dispositif de serrage (1) pour article chaussant, de la sorte comprenant un élément de sangle (3) et des moyens ou des éléments de tensionnement (5, 7, 9, 11) destinés à tendre ledit élément de sangle, dans lequel lesdits éléments de tensionnement comprennent un élément de crochet (11) et ledit élément de sangle est relié auxdits moyens de tensionnement par l'intermédiaire dudit élément de crochet (11), **caractérisé en ce que** ledit élément de sangle (3) se replie sur lui-même formant ainsi une boucle autour d'un élément de retour, dans lequel ledit élément de retour est relié à un tirant (9) relié à un élément de levier (5) et dans lequel ledit élément de retour est l'élément de crochet (11).

2. Dispositif de serrage selon la revendication 1, dans lequel l'extension de la section pliée dudit élément de sangle (3) peut être ajustée.

3. Dispositif de serrage selon la revendication 1 ou 2, dans lequel ledit élément de sangle comprend une pluralité d'oeillets alignés agencés à une distance mutuelle, dans lequel lesdits éléments de tensionnement comprennent un tirant (9) relié à un élément de levier (5) et dans lequel ledit tirant se termine par un élément de crochet (11) adapté pour s'engager dans l'un desdits oeillets.

4. Article chaussant (10), en particulier article chaussant de sport, comprenant une semelle (12) ; et une tige (14), ladite tige comprenant une ouverture longitudinale (16) définissant à des extrémités opposées des quarts correspondants de la tige, dans lequel des dispositifs de serrage sont ménagés le long de ladite ouverture longitudinale (16), **caractérisé en ce qu'**au moins un desdits dispositifs de serrage est un dispositif de serrage (1) selon l'une quelconque des revendications 1 à 4.

5. Article chaussant (10) selon la revendication 4, dans lequel ladite tige (14) comprend une partie inférieure (14a) et une partie supérieure (14b).

6. Article chaussant (10) selon la revendication 5, dans lequel un dispositif de serrage (1) selon l'une quelconque des revendications 1 à 4 est agencé le long de ladite ouverture longitudinale (16) au niveau de ladite partie inférieure (14a) de ladite tige.

7. Article chaussant (10) selon la revendication 6 ou 5, dans lequel un dispositif de serrage (1) selon l'une quelconque des revendications 1 à 4 est agencé le long de ladite ouverture longitudinale (16) au niveau de ladite portion supérieure (14b) de ladite tige.
